# EUROPÄISCHE PATENTSCHRIFT

(11) **EP 1 590 156 B1**
(45) Veröffentlichungstag und Bekanntmachung des Hinweises auf die Patenterteilung: **23.05.2007**
(21) Anmeldenummer: 03815539.6
(22) Anmeldetag: 30.10.2003
(51) Int. Cl.: B29C 45/34

(54) **ENTLÜFTUNGSHILFE FÜR EIN SPRITZGUSSWERKZEUG UND VERFAHREN ZU DEREN HERSTELLUNG**
DEAERATING AID FOR AN INJECTION MOULDING TOOL AND METHOD FOR PRODUCING THE SAME
EVENT POUR UN OUTIL DE MOULAGE PAR INJECTION ET PROCEDE DE PRODUCTION

(30) Priorität: 31.01.2003 DE 10303872
(43) Veröffentlichungstag der Anmeldung: 02.11.2005
(73) Patentinhaber: Braun GmbH, 61476 Kronberg (DE)
(72) Erfinder: EIMANN, Klaus, 97225 Zellingen (DE); DRACH, Manfred, 97877 Wertheim (DE)
(86) Internationale Anmeldenummer: PCT/EP2003/012037
(87) Internationale Veröffentlichungsnummer: WO 2004/067256

(56) Entgegenhaltungen:
- DE-A- 4 334 133
- DE-U- 9 005 669
- FR-A- 2 217 137
- US-A1- 2002 100 860

## Beschreibung

Die Erfindung betrifft ein Spritzgußwerkzeug mit einer Entlüftungseinrichtung zum Herstellen von Kunststoffbauteilen gemäß dem Oberbegriff des Patentanspruchs 1, sowie ein Verfahren zu deren Herstellung gemäß Patentanspruch 8.

Beim Einspritzen von polymerer Kunststoffmasse in das Spritzgußwerkzeug, bildet sich in der formgebenden Höhlung am Fließwegende im allgemeinen eine Gasblase. Diese Gasblase besteht im wesentlichen aus verunreinigter Luft und aus verdampfter Spritzguß-Polymermasse. Wenn die Spritzguß-Polymermasse durch den Einspritzdruck bzw. den Nachdruck vollständig ausgedrückt wird, dann wird-die Gasblase komprimiert und entweicht schließlich mit hoher Temperatur und hohem Druck über die Trennebene oder die Bewegungselemente des Spritzgußwerkzeugs. Hierbei kann es zu unerwünschten Beschädigungen oder Fehlstellen und damit zum Ausschuß des Produkts kommen.

Um Beschädigungen, wie Brenner am Kunststoffartikel bzw. am Spritzgußwerkzeug zu verhindern, werden daher sogenannte Entlüftungshilfen oder Entlüftungseinrichtungen am Fließwegende der Polymer- bzw. Kunststoffmasse eingebracht. Dabei handelt es sich in der Regel um Entlüftungskanäle, die vorzugsweise aus Entlüftungseinsätzen aus Sintermetall etc. bestehen.

Außerdem lassen sich auch Haftungsprobleme von Verbindungen zwischen einer harten Polymermasse und einer weichen elastomeren Polymermasse eines Spritzlinges durch ein Spritzgußwerkzeug mit einer guten Entlüftung eliminieren, da hier die Fließwege im aus harter Polymermasse hergestellten Vorspritzling bis zum Fließwegende vollständig mit weicher Polymermasse ausgefüllt werden, ohne daß durch komprimierte Gastaschen unerwünschte Ablösestellen auftreten.

Derzeit werden bei konventionellen Spritzgußwerkzeugen entsprechende Entlüftungshilfen durch aufwendige manuelle Nachbearbeitung der Formen eingebracht. Die dabei verwendeten Arbeitstechniken umfassen Schleifen, Funkenerosion oder ähnliche.

Ferner werden derzeit bei Spritzgußformen für Kunststoffkleinteile, die beispielsweise zur Herstellung von Produkten der Dentaltechnik, wie elektrischen oder manuellen Zahnbürsten, vorgesehen sind, häufig spröde poröse Sintereinsätze als Entlüftungseinrichtung verwendet.

Nachteil dieser insbesondere bei filigranen Kunststoffbauteilen verwendeten Entlüftungstechnik kann zum einen die poröse Oberfläche des Sintereinsatzes sein, die auf dem fertigen Spritzling abgebildet werden kann, sofern hier noch Polymermasse oder sonstige Kunststoffspritzmasse vorhanden ist. Aber viel gravierender ist die Tatsache, daß sich die Poren durch überschüssige Polymermasse in kurzer Zeit zusetzen können. Da der erste Sintereinsatz 3 lediglich in Entlüftungsrichtung fixiert ist, ist kein Ausblasen der zugesetzten Poren mit Druckluft zu Reinigungszwecken möglich. Hier muß gegebenenfalls eine Reinigung mit Aceton erfolgen, um die mit Polymermasse zugesetzten Poren des Sintereinsatzes wieder gasdurchlässig zu machen. Diese Art der Reinigung ist insbesondere bei filigranen Formen kritisch. Außerdem neigen entsprechende harte aber spröde Sintereinsätze leicht zum Ausbrechen von Teilen und müssen häufig dann komplett ersetzt werden. Kommt es zu einem Ausbrechen im Betrieb, so kann dies unter Umständen zum Verlust einer ganzen Marge und zur Unterbrechung des Produktionsablaufs führen. Auch kann hierdurch das Werkzeug beschädigt werden.

Aus der DE-9005669.8 U ist bereits eine Entlüftungseinrichtung für eine Spritzgießform bekannt, bei der die Entlüftungsbohrungen von Mikrobohrungen im Durchmesser von etwa 0,1 mm eingesetzt werden. In der Praxis hat sich nun herausgestellt, daß diese Mikrobohrungen leicht zu Verstopfungen durch Ablagerungen führen und somit in verhältnismäßig kurzen Abständen die Produktion von Kunststoffspritzteilen gestoppt und das Werkzeug aufwendig gesäubert werden muß.

Eine weitere entlüftungseinrichtung ist aus der DE-A-4334133 bekannt.

Der vorliegenden Erfindung liegt daher die Aufgabe zu Grunde, eine verbesserte Entlüftungseinrichtung mit leichter Reinigung auch während des Betriebes für ein Spritzgußwerkzeug zur Verfügung zu stellen, die die Nachteile des Standes der Technik vermeidet und die eine für den Spritzgußbetrieb sichere und kostengünstige Lösung darstellt, wobei Verstopfungen durch Ablagerungen in den Mikrobohrungen vermieden werden sollen. Ferner soll ein entsprechendes Verfahren zur Herstellung einer solchen verbesserten Entlüftungseinrichtung für ein Spritzgußwerkzeug aufgezeigt werden, die einfach herstellbar ist und mit der überhaupt derartige Mikrobohrungen herstellbar sind.

Die erfindungsgemäße Aufgabe wird durch eine verbesserte Entlüftungseinrichtung für ein Spritzgußwerkzeug mit den Merkmalen des Patentanspruchs 1 und ein erfindungsgemäßes Verfahren zur Herstellung von Entlüftungseinrichtungen für ein Spritzgußwerkzeug mit den Merkmalen des Patentanspruchs 8 gelöst. Vorteilhafte Ausgestaltungen und Weiterbildungen der Erfindung sind in den Unteransprüchen dargestellt.

Die erfindungsgemäße Entlüftungseinrichtung gemäß Patentanspruch 1 ist für alle im Formenbau vorkommenden Oberflächenstrukturen geeignet und ist besonders vorteilhaft, da die zur Entlüftung angebrachten Mikrobohrungen im Betrieb voll funktionsfähig bleiben, da hier sowohl eine Entlüftung mittels Vakuum als auch eine einfache Reinigung durch Druckluft erfolgen kann. Als besonders vorteilhaft hat sich dabei die Reinigung der Mikrobohrungen durch zyklisches Blasen mit Druckluft herausgestellt. Durch die besonders im Durchmesser kleinen Mikrobohrungen im Bereich von kleiner oder gleich 0,06 mm, vorzugsweise 0,04 mm, ist ein Eindringen von Kunststoffmasse bzw. Ablagerungen praktisch ausgeschlossen, so daß Verstopfungen vermieden werden und daher die Formen über sehr lange Zeiträume fehlerfrei ohne Bildung von Ausschuß laufen. Durch die erfindungsgemässe Ausführung wird erreicht, dass ein gewisser Selbstreinigungseffekt erzielt wird und so Verstopfungen durch unerwünschte Ablagerungen noch besser vermieden werden.

Als Innenseite der Entlüftungshilfe soll hier die dem Formhohlraum und damit dem Fließwegende der polymeren Kunststoffmasse zugewandte Seite verstanden werden. Dabei können die Mikrobohrungen jede beliebige geometrische Fläche bedecken, beispielsweise eine Kreisfläche, ein Oval, ein Rechteck, ein Polygon oder eine ähnliche Fläche. Der mit Mikrobohrungen versehenen Einsatz kann dabei regelmäßig oder unregelmäßig mit Mikrobohrungen perforiert sein.

Eine bevorzugte Ausführungsform der erfindungsgemäßen Entlüftungseinrichtung oder auch Entlüftungshilfe weisen die Merkmale des Patentanspruchs 2 auf. Dabei ergeben sich Einschränkungen je nach Werkzeugart und Größe für das Einbringen der Mikrobohrungen in dem Spritzgußwerkzeug selbst.

Eine alternative vorteilhafte Ausführungsform sehen die Merkmale des Patentanspruchs 3 vor. Dabei ist keine Einschränkung aufgrund der Werkzeuggröße gegeben und als weiterer Vorteil ist der leichte Austausch des Entlüftungseinsatzes und die einfache Wartung desselben hervorzuheben. Außerdem lassen sich derartige Entlüftungseinsätze einfach in bereits bestehenden Spritzgußwerkzeugen nachrüsten, beispielsweise durch Einsetzen in bereits vorhandene Aussparungen für Sintereinsätze oder durch nachträgliches Ausarbeiten von Ausgängen zum Einsetzen der mit Mikrobohrungen versehenen Einsätze.

Eine vorteilhafte Weiterbildung der Ausführungsform nach Patentanspruch 3 sehen die Merkmale des Patentanspruchs 4 vor. Der Aufbau kann dabei beispielsweise als abgesetzter Zylinder mit Distanzring oder aber beispielsweise durch Schweißen, Löten oder Kleben erfolgen. Hierdurch wird der Entlüftungseinsatz in vorteilhafter Weise in alle Richtungen fixiert, wodurch sowohl Entlüften als auch Druckbeaufschlagung mit Druckluft zu Reinigungszwecken möglich ist.

Eine weitere vorteilhafte Ausgestaltung der erfindungsgemäßen Entlüftungshilfe für ein Spritzgußwerkzeug weisen die Merkmale des Patentanspruchs 5 auf. Der Entlüftungseinsatz kann dabei beispielsweise aus einer geeigneten Stahllegierung, aus Messing oder einen geeigneten Keramikwerkstoff, beispielsweise Aluminiumoxid, Zirkonoxid, Siliziumcarbid oder Siliziumnitrid, bestehen.

Eine weitere vorteilhafte Ausführungsform der vorliegenden Erfindung weisen die Merkmale des Patentanspruchs 6 auf. Als Außenseite der Entlüftungshilfe soll hier die dem Formhohlraum abgewandte Seite bezeichnet werden, die beispielsweise einer mit Vakuum beaufschlagten Entlüftungskammer zugewandt sein kann. Durch die entsprechende Wahl der Ausgangsöffnungen können Mikrobohrungen mit konischem Querschnitt produktionstechnisch realisiert werden. Der Durchmesser auf der Ausgangsseite begrenzt dabei die Anzahl der Öffnungen auf der Innenseite.

Die Ausgestaltung der erfindungsgemäßen Entlüftungshilfe mit den Merkmalen des Patentanspruchs 7 ist besonders vorteilhaft, da hier auch dicke Wandstärken einer Spritzgußform bzw. eines Entlüftungseinsatzes von beispielsweise 2 mm mit Mikrobohrungen von gleichbleibend hoher Qualität perforiert werden können.

Das erfindungsgemäße Verfahren zur Herstellung einer Entlüftungshilfe für ein Spritzgußwerkzeug wird durch die Merkmale des Patentanspruchs 8 unter Schutz gestellt. Dabei kann in vorteilhafter Weise für den Laserstrahlabtrag ein diodengepumpter Festkörperlaser im Q-Switch-Betrieb mit hoher Strahlqualität eingesetzt werden. Es hat sich in Versuchen gezeigt, daß Mikrobohrungen, die mit geringer Pulsstärke (beispielsweise < 1,5 mJ) und großer Bohrzeit (beispielsweise > 90 sec) hergestellt wurden, geringe Schlackeablagerungen und somit eine hohe Bohrungsqualität aufweisen. Brauchbare Bohrungen können beispielsweise mit einer Bohrzeit von 45 sec bis 90 sec und einer Pulsstärke von 0,4 mJ bis 4 mJ abhängig von der jeweiligen zu durchdringenden Materialstärke und Materialart erreicht werden. Eine beispielhafte Laserpulsfrequenz beträgt dabei zwischen 5 kHz und 20 kHz. Besonders vorteilhaft ist dabei, daß das Laserbohrverfahren für alle zur Herstellung von Entlüftungseinsätzen geeigneten Materialien gleichermaßen anwendbar ist. Dabei wird bei der Herstellung einer konisch verlaufenden Bohrung ein rotierender und dabei noch taumelnder Laserstrahl verwendet.

Weitere Ausgestaltungen, Vorteile der Erfindung werden durch die Beschreibung eines Ausführungsbeispieles unter Bezugnahme auf die beigefügten Zeichnungen erläutert. Darin zeigen:
- Fig. 1: eine schematische Schnittdarstellung eines Details eines Spritzgußwerkzeuges mit einer Entlüftungseinrichtung gemäß dem Stand der Technik und
- Fig. 2:: eine schematische Schnittdarstellung eines Spritzgußwerkzeuges mit einer verbesserten Entlüftungseinrichtung gemäß der vorliegenden Erfindung.

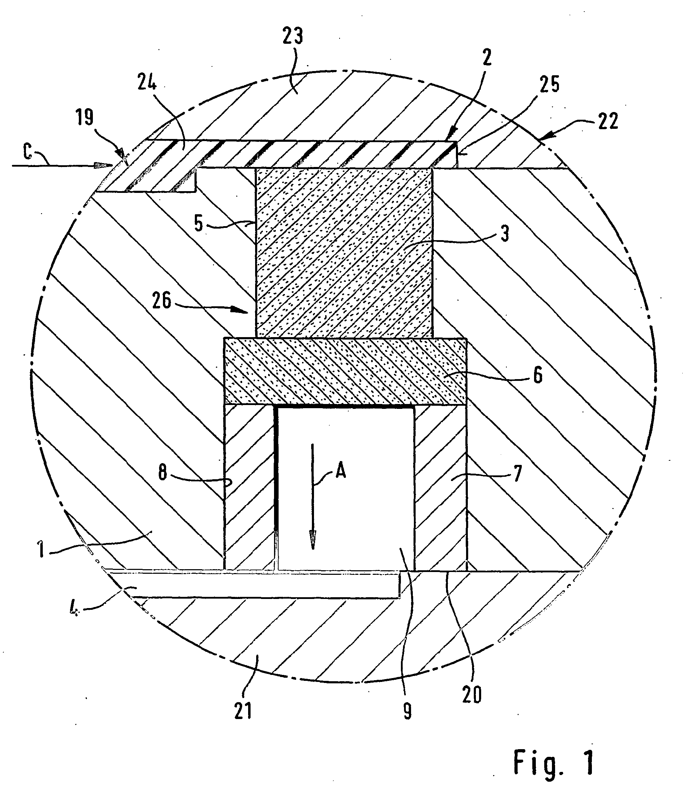

In Fig. 1 wird beispielhaft ein Detail einer Entlüftungseinrichtung 26 für eine Spritzgußform 22 vom Stand der Technik schematisch im Schnitt dargestellt. Dabei besteht die Spritzgußform 22 aus einem dem Spritzling 24 (nur teilweise dargestellt) die Kontur gebenden Bauteil, dem oberen und unteren Formeinsatz 23, 1, das von unten her durch eine untere Formplatte 21 eingebettet ist. Bei der gezeigten Entlüftungseinrichtung 26 ist im Bereich des Fließwegendes 2 ein erster Sintereinsatz 3 zur Entlüftung des Formhohlraums 19 in Pfeilrichtung A zum Vakuumkanal 4 vorgesehen. Das hier gezeigte Teil des Spritzlings 24 stellt ein Teil seiner Wand dar, die an der Stufe 25 endet und in Spritzrichtung C das Ende des Spritzlings 24 bildet.

Der im wesentlichen zylindrisch ausgebildete poröse erste Sintereinsatz 3 ist in eine zylindrische Bohrung 5 in den unteren Formeinsatz 1 eingefügt. Auf den ersten Sintereinsatz 3 folgt ein zweiter ebenfalls zylindrischer Sintereinsatz 6 mit größerem Durchmesser aber geringerer Höhe. Dieser zweite Sintereinsatz 6 wird durch einen Distanzring 7 in einer Sackbohrung 8 des unteren Formeinsatzes 1 gehalten, die eine Entlüftungskammer 9 bildet. Der Distanzring 7 stützt sich über sein unteres Ende 20 an der unteren Formplatte 21 ab.

Durch diesen Aufbau wird eine Fixierung des ersten Sintereinsatzes 3 in entgegengesetzter Richtung zu Pfeilrichtung A erreicht, da sich das untere Ende 20 des zweiten Sintereinsatzes 6 an der Formplatte 21 abstützt. Dadurch kann sich durch die Polymermasse und durch die von dieser verdrängte Gasblase, die am Fließwegende 2 auf den ersten Sintereinsatz 3 drückt, den ersten und zweiten Sintereinsatz 3, 6 nicht in Richtung der Entlüftungskammer 9 herausschieben. In umgekehrter Richtung ist der Sintereinsatz 3 jedoch nicht fixiert und wird auch daher nur von einer Seite mit Druck beaufschlagt.

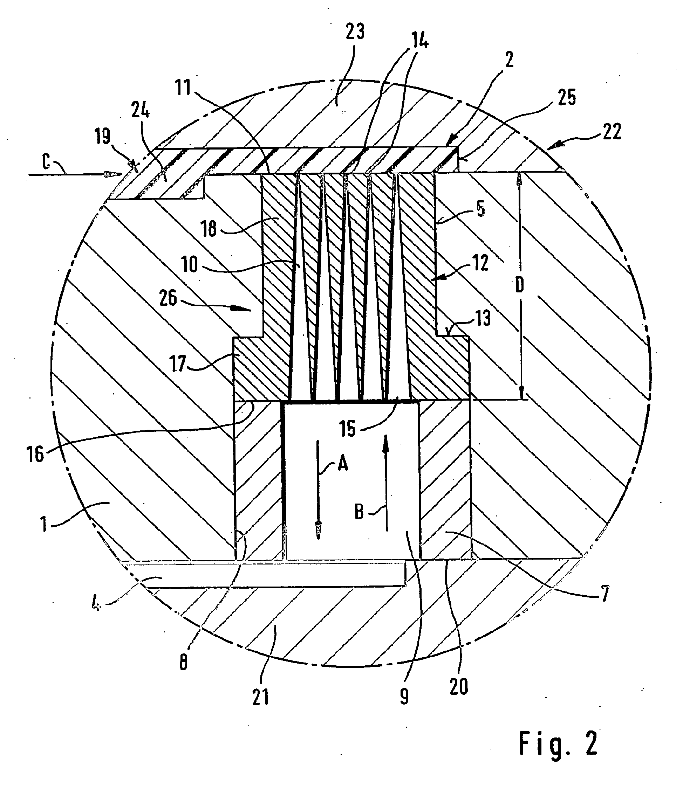

Fig. 2 zeigt eine schematische Darstellung einer bevorzugten Ausführungsform einer verbesserten Entlüftungseinrichtung 26 für ein nur im Ausschnitt teilweise gezeigtes Spritzgußwerkzeug 22 gemäß einer vorteilhaften Ausführungsform der vorliegenden Erfindung. Um Wiederholungen zu vermeiden, stimmen, mit Ausnahme der Teile 3 und 6, alle anderen Teile mit der Zeichnung gemäß Fig. 1 überein, so daß auf diese hier nicht mehr besonders eingegangen werden muß

In der Stufenbohrung 5, 8 des unteren Formeinsatzes 1 ist gemäß Fig. 2 ein Entlüftungseinsatz 12 im Schnitt dargestellt. Der Entlüftungseinsatz 12 besteht im vorliegenden Ausführungsbeispiel aus einem gestuften Zylinder mit einem Oberteil 18 und einem unteren leicht hervorstehenden umlaufenden Rand 17. Der Entlüftungseinsatz 12 ist aus einer Edelstahllegierung hergestellt und durch Bearbeitung mittels eines gepulsten Festkörperlasers mit einer Vielzahl regelmäßig angeordneter Mikrobohrungen 10 versehen. Die Laseranlage heißt "Powergator 1064" von der Firma Lamda Physik oder "Innoslab 1064-40E" von der Firma Edgewave. Der Laser hat eine Hochgeschwindigkeitsdrehachse von Uₘₐₓ = 13 500 1/sec.

Die Mikrobohrungen 10 weisen einen konisch verlaufenden Querschnitt auf, d.h. der Bohrungsdurchmesser wird von der Außenseite 16 des Entlüftungseinsatzes 12 hin zur Innenseite 11 des Entlüftungseinsatzes 12 kleiner. Im vorliegenden Ausführungsbeispiel beträgt der Durchmesser der Ausgangsöffnung 15 an der Außenseite 16 etwa 0,1 mm. Der Durchmesser der Entlüftungsöffnung 14 an der perforierten Innenseite 11 des Entlüftungseinsatzes 12 beträgt im vorliegenden Ausführungsbeispiel etwa 0,04 mm. Die Dicke D des Entlüftungseinsatzes 12 beträgt im vorliegenden Ausführungsbeispiel 2 mm.

Der Entlüftungseinsatz 12 ist in einer Bohrung 5 in der Wand des unteren Formeinsatzes 1 des Spritzgußwerkzeugs 22 aufgenommen, die in ihrem unteren Abschnitt eine Sackbohrung 8 mit größerem Durchmesser aufweist. Die Bohrung 5 verbindet das Fließwegende 2 der in dem Formhohlraum 19 des Spritzgußwerkzeugs 22 eingebrachten polymeren Kunststoffmasse mit einer Entlüftungskammer 9. Dabei steht die Entlüftungskammer 9 bzw. Entlüftungskanal 9 über einen Vakuumkanal 4 unter Vakuum.

Der Entlüftungseinsatz 12 wird durch einen Distanzring 7 in der Sackbohrung 8 gehalten und durch einen umlaufenden zylindrischen Rand 17, der breiter ist als das zylindrische Oberteil 18 des Entlüftungseinsatzes 12, an einem Absatz 13 der Sackbohrung 8 in der anderen Richtung arretiert. Hierdurch ergibt sich eine formschlüssige Verbindung, die den Entlüftungseinsatz 12 gegen den in Pfeilrichtung A auftretenden Gasdruck der aus dem Formhohlraum 19 des Spritzgußwerkzeugs 1 am Fließwegende 2 austretenden Verdrängungsgase in seiner Position hält.

Zum anderen wird ein zyklisches Einblasen von Druckluft in Pfeilrichtung B in die Mikrobohrungen 10 zum Reinigen derselben ermöglicht. Die Strömungsrichtung der austretenden Gase in den Vakuumkanal 4 ist dabei in Fig. 2 mit der Pfeilrichtung A dargestellt. Der Reinigungsvorgang durch zyklisches Blasen ist mit Pfeilrichtung B dargestellt. Die Entlüftungswirkung wird durch ein Vakuum in der Entlüftungskammer oder Entlüftungskanal 9 an der Außenseite 16 des Entlüftungseinsatzes 12 verstärkt.

Die konisch verlaufenden Mikrobohrungen 10 sind dabei mittels eines Laserabtragverfahrens in den 2 mm dicken Entlüftungseinsatz 12 eingebracht worden. Hierfür ist ein diodengepumpter Festkörperlaser im Q-Switch-Betrieb mit hoher Strahlqualität zum Einsatz gekommen. Zur Herstellung der konischen Bohrungen 10 wurde der Laserstrahl relativ zur Werkstückoberfläche des Entlüftungseinsatzes 12 verkippt.

Beim Spritzen von Kunststoffteilen wird in Richtung C solange in den Formhohlraum 19 Kunststoffmasse eingespritzt, bis dieser und auch das Fließwegende 2 voll mit Kunststoffmasse ausgefüllt sind. Die am Ende des Fließweges 2 verbleibende Luft wird über die Mikrobohrungen 10, den Entlüftungskanal 9 in den Vakuumkanal 4 abgeführt, so daß das Fließwegende 2 voll mit Kunststoffmasse gefüllt werden kann. Sollten sich die Entlüftungsöffnungen 14 der Mikrobohrungen 10 im Laufe der Zeit durch Schmutzablagerungen verschließen, so wird in Richtung B Luft eingeblasen, die bei geöffnetem Spritzgußwerkzeug 22 - oberer und unterer Formeinsatz 23, 1 werden voneinander nach oben bzw. nach unten wegbewegt - die Schmutzpartikel aus den Mikrobohrungen 10 herausbläst und die dann leicht aus dem Spritzgußwerkzeug 22 herausfallen.

## Patentansprüche

1. Spritzgußwerkzeug (22) zum Spritzen von Kunststoffbauteilen oder Spritzlingen (24), wobei am Fließwegende (2) der in einen Formhohlraum (19) des Spritzgußwerkzeugs (1) eingebrachten Kunststoffmasse zum Entlüften von Verdrängungsgasen eine Entlüftungseinrichtung (26) vorgesehen ist, wobei die Entlüftungseinrichtung (26) als ein mit mehreren Mikrobohrungen (10) perforierter Abschnitt im Wandbereich des Spritzgußwerkzeugs (22) ausgebildet ist,
**dadurch gekennzeichnet,**
**daß** die Mikrobohrungen (10) an der dem Spritzling (24) zugewandten Innenseite (11) der Entlüftungseinrichtung (26) einen Durchmesser von kleiner oder gleich 0,06 mm vorzugsweise 0,04 mm aufweisen und daß die Mikrobohrungen (10) einen konischen, sich zu der dem Spritzling (24) zugewandten Innenseite (11) der Entlüftungseinrichtung (26) hin verjüngenden Querschnitt aufweisen.

2. Spritzgußwerkzeug (22) nach Patentanspruch 1,
**dadurch gekennzeichnet,**
**daß** die Entlüftungseinrichtung (26) einstückig mit dem Spritzgußwerkzeug (22) verbunden ist.

3. Spritzgußwerkzeug (22) nach Patentanspruch 1,
**dadurch gekennzeichnet,**
**daß** die Entlüftungseinrichtung (26) als Entlüftungseinsatz (12) in einer dafür geeigneten Aussparung (5, 8) im Wandbereich des Spritzgußwerkzeugs (22) vorgesehen ist.

4. Spritzgußwerkzeug (22) nach Patentanspruch 3,
**dadurch gekennzeichnet,**
**daß** der Entlüftungseinsatz (12) durch Formschluß, Kraftschluß oder Fügen im Spritzgußwerkzeug (22) fixiert ist.

5. Spritzgußwerkzeug (22) nach Patentanspruch 3 oder 4,
**dadurch gekennzeichnet,**
**daß** der Entlüftungseinsatz (12) aus Hartmetall, Weichmetall oder Keramik hergestellt ist.

6. Spritzgußwerkzeug (22) nach einem der voranstehenden Patentansprüche,
**dadurch gekennzeichnet,**
**daß** die Mikrobohrungen (10) an der dem Spritzling (24) abgewandten Außenseite (16) der Entlüftungseinrichtung (26) einen Durchmesser von 0,05 mm bis 0,1 mm aufweisen.

7. Spritzgußwerkzeug (22) nach einem der voranstehenden Patentansprüche,
**dadurch gekennzeichnet,**
**daß** die Mikrobohrungen (10) als im Laserverfahren hergestellte Bohrungen ausgebildet sind.

8. Verfahren zum Herstellen einer Entlüftungseinrichtung für ein Spritzgußwerkzeug, wobei in dem Spritzgußwerkzeug oder einem hierfür vorgesehenen Lüftungseinsatz mit einem Festkörperlaser Mikrobohrungen eingebracht werden, wobei der Laserstrahl zur Erzeugung konischer Bohrungen relativ zur Werkstückoberfläche verkippt rotiert wird, **dadurch gekennzeichnet, dass** die Mikrobohrungen mit einem Durchmesser von kleiner oder gleich 0,06 mm verjüngend zu der dem Spritzling (24) hin zugewandten Innenseite der Entlüftungseinrichtung (26) erzeugt werden.

## Claims

1. An injection moulding tool (22) for injection moulded plastic components, or injection mouldings (24), wherein a venting construction (26) is provided at the end of the flow path (2) of the plastic mass that is introduced into a forming cavity (19) of the injection moulding tool (1) to vent the displacement gases, wherein the venting construction (26) is created in the wall area of the injection moulding tool (22) in the form of a section perforated with multiple microholes (10),
**characterised in that**
the microholes (10) on the inner side (11) of the venting construction (26) facing the injection moulding (24) have a diameter of less than or equal to 0.06 mm, preferably 0.04 mm, and that the microholes (10) have a conical cross section that tapers towards the inner side of the venting construction that is facing the injection moulding (24).

2. The injection moulding tool (22) as recited in claim 1,
**characterised in that**
the venting construction (26) is connected integrally with the injection moulding tool (22).

3. The injection moulding tool (22) as recited in claim 1,
**characterised in that**
the venting construction (26) is provided as a venting insert (12) in a recess (5, 8) in the wall area of the injection moulding tool (22) that is suitable therefor.

4. The injection moulding tool (22) as recited in claim 3,
**characterised in that**
the venting insert (12) is fixed in the injection moulding tool (22) by positive locking means, by non-positive locking means, or by jointing.

5. The injection moulding tool (22) as recited in claim 3 or 4,
**characterised in that**
the venting insert (12) is made from hard metal, soft metal, or ceramic.

6. The injection moulding tool (22) as recited in any of the preceding claims,
**characterised in that**
the microholes (10) on the outer side (16) of the venting construction (26), facing away from the injection moulding (24) have a diameter of 0.05 mm to 0.1 mm.

7. The injection moulding tool (22) as recited in any of the preceding claims,
**characterised in that**
the microholes (10) are formed as holes created in a laser process.

8. A method for producing a venting construction for an injection moulding tool, wherein microholes are created with a solid state laser in the injection moulding tool or in a venting insert provided for that purpose, wherein the laser beam is rotated tilted relative to the surface of the work piece in order to produce conical holes,
**characterised in that**
the microholes are created with a diameter of less than or equal to 0.06 mm and tapering towards the inner side of the venting construction (26), facing the injection moulding (24).

## Revendications

1. Outil de moulage par injection (22) pour mouler par injection des composants en matière synthétique ou des pièces moulées par injection (24), un évent (26) étant prévu à l'extrémité de la trajectoire d'écoulement (2) de la masse de matière synthétique introduite dans une cavité (19) de moule de l'outil de moulage par injection (1) pour l'échappement des gaz refoulés, le évent (26) étant configuré comme une section perforée de plusieurs micro-perforations (10) dans la zone pariétale de l'outil de moulage par injection (22), **caractérisé en ce que** les micro-perforations (10) présentent sur le côté intérieur (11) de l'évent (26) qui est orienté vers la pièce moulée par injection (24) un diamètre inférieur ou égal à 0,06 mm, de préférence 0,04 mm, et **en ce que** les micro-perforations (10) présentent une section transversale conique s'effilant en direction du côté intérieur (11) de l'évent (26) orienté vers la pièce moulée par injection (24).

2. Outil de moulage par injection (22) selon la revendication 1, **caractérisé en ce que** l'évent (26) est relié à l'outil de moulage par injection (22) pour ne faire qu'un avec celui-ci.

3. Outil de moulage par injection (22) selon la revendication 1, **caractérisé en ce que** l'évent (26) est prévu comme insert d'échappement (12) dans un évidement (5, 8) approprié à cet effet dans la zone pariétale de l'outil de moulage par injection (22).

4. Outil de moulage par injection (22) selon la revendication 3, **caractérisé en ce que** l'insert d'échappement (12) est fixé par liaison de forme, liaison de force ou jointure dans l'outil de moulage par injection (22).

5. Outil de moulage par injection (22) selon la revendication 3 ou 4, **caractérisé en ce que** l'insert d'échappement (12) est fabriqué en métal dur, en métal mou ou en céramique.

6. Outil de moulage par injection (22) selon l'une des revendications précédentes, **caractérisé en ce que** les micro-perforations (10) présentent sur le côté extérieur (16) de l'évent (26) opposé à la pièce moulée par injection (24) un diamètre de 0,05 mm à 0,1 mm.

7. Outil de moulage par injection (22) selon l'une des revendications précédentes, **caractérisé en ce que** les micro-perforations (10) sont configurées comme des perforations produites par un procédé au laser.

8. Procédé pour produire un évent pour un outil de moulage par injection, des micro-perforations étant réalisées avec un laser solide dans l'outil de moulage par injection ou dans un insert d'échappement prévu à cet effet, le faisceau laser étant mis en rotation de manière basculée par rapport à la surface de la pièce d'oeuvre pour produire des perforations coniques, **caractérisé en ce que** les micro-perforations sont produites avec un diamètre inférieur ou égal à 0,06 mm se rétrécissant en direction du côté intérieur de l'évent (26) orienté vers la pièce moulée par injection (24).
